# EUROPEAN PATENT SPECIFICATION

(11) **EP 3 674 329 B1**
(45) Date of publication and mention of the grant of the patent: **17.07.2024**
(21) Application number: 18848048.7
(22) Date of filing: 20.07.2018
(51) Int. Cl.: C08F 2/44, C08F 2/50, C08F 263/06, C08L 31/06, C09D 11/02, C09D 157/10, C09J 11/06, C09J 157/10, C08F 18/16, C08K 5/54, C09D 11/106, C09D 131/06

(54) **PHOTOCURABLE RESIN COMPOSITION, INK, AND PAINT**
LICHTHÄRTBARE HARZZUSAMMENSETZUNG, TINTE UND LACK
COMPOSITION DE RÉSINE PHOTODURCISSABLE, ENCRE, ET PEINTURE

(30) Priority: 24.08.2017 JP 2017161632
(43) Date of publication of application: 01.07.2020
(73) Proprietor: Osaka Soda Co., Ltd., Osaka-shi, Osaka 550-0011 (JP)
(72) Inventor: FUJIYAMA, Takuya, Osaka-shi, Osaka 550-0011 (JP); IWASAKI, Reina, Osaka-shi, Osaka 550-0011 (JP); OHASHI, Shinichiro, Osaka-shi, Osaka 550-0011 (JP); INOUE, Satoshi, Osaka-shi, Osaka 550-0011 (JP)
(74) Representative: Vossius & Partner Patentanwälte Rechtsanwälte mbB
(86) International application number: PCT/JP2018/027321
(87) International publication number: WO 2019/039158

(56) References cited:
- EP-A1- 3 199 562
- WO-A1-2016/125661
- WO-A1-2016/125663
- JP-A- 2001 172 364
- JP-A- 2002 030 105
- JP-A- 2004 026 934
- JP-A- 2012 046 612
- JP-A- 2012 116 868
- JP-A- H08 168 722

## Description

### TECHNICAL FIELD

The present invention relates to photocurable resin compositions containing an allyl polymer (A) and a silane coupling agent (B), and also relates to inks and coating materials which include the resin compositions. More particularly, the present invention relates to photocurable resin compositions having excellent adhesion to plastic substrates.

### BACKGROUND ART

Various resin compositions which can be cured by light (e.g. ultraviolet rays) have been used in inks, coating materials, adhesives, photoresists, and other applications. For example, UV curable printing inks are highly valued because, e.g., they have a high cure rate so that they can be cured in a short time; they are environmentally friendly due to no use of solvents; and they can save resources and energy. Therefore, they are increasingly widely used in practice.

Among such resin compositions, those containing diallyl phthalate resins derived from diallyl phthalates (diallyl orthophthalate, diallyl isophthalate, diallyl terephthalate) are used as UV offset inks for paper.

However, in offset ink applications, the use of diallyl phthalate resins is known to lead to insufficient adhesion to plastic substrates (see, for example, Patent Literature 1). As products of various types of plastic materials, including polyethylene terephthalate (PET) and polypropylene (PP), have been marketed in recent years, there is a need to improve adhesion to plastic substrates with which diallyl phthalate resins have problems.

Patent Literature 2 describes that a silane coupling agent having an amino group is added into an active energy ray-curable ink composition that may form a strong cured film with excellent water resistant adhesion on olefinic resins. The silane coupling agent, however, needs to be used in combination with a specific acrylate. Thus, the choice of acrylates is limited, resulting in poor versatility.

EP3199562A1 discloses photocurable resin compositions for inks and coatings having good adhesion to plastic substrates.

### CITATION LIST

### PATENT LITERATURE

Patent Literature 1: JP S52-4310 A
Patent Literature 2: JP 2013-199591 A

### SUMMARY OF INVENTION

### TECHNICAL PROBLEM

The present invention aims to provide a photocurable resin composition that can constitute a composition having excellent adhesion to plastic substrates.

### SOLUTION TO PROBLEM

As a result of extensive studies, the present inventors found out that a photocurable resin composition containing an allyl polymer (A) produced by polymerizing an allyl compound having a specific structure and a silane coupling agent (B) has excellent adhesion to plastic substrates. The inventors thus arrived at the present invention.

Specifically, the photocurable resin composition of the present invention contains: an allyl polymer (A) produced by polymerizing an allyl compound represented by the following formula (1): 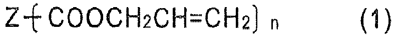 wherein n is an integer of 2 to 4 and Z is an n-valent alicyclic hydrocarbon group that may have an alkyl group; and a silane coupling agent (B).

A composition containing an allyl polymer (A) produced by polymerizing an allyl compound of formula (1) and a silane coupling agent (B) can constitute a photocurable resin composition having excellent adhesion to plastic substrates. Further, the adhesion to plastic substrates can be synergistically improved by the combination of the allyl polymer (A) and the silane coupling agent (B).

Moreover, the photocurable resin composition has excellent adhesion particularly to polypropylene (PP) resins.

This is probably because the silane coupling agent (B) serves as an adhesion promoter to mediate between PP resins and the allyl polymer (A), and thus the photocurable composition containing the allyl polymer (A) and silane coupling agent (B) includes a favorable combination in terms of adhesion to PP resins.

The photocurable resin composition is thus suitable as a component of inks or coating materials for PP resins, which have been difficult to improve in terms of adhesion using conventional diallyl phthalate resin-based compositions.

In the photocurable resin composition of the present invention, the allyl compound of formula (1) is preferably a compound represented by any of the following formulas (2) to (9): 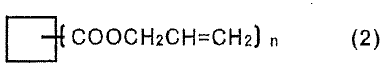 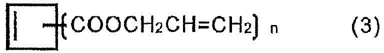 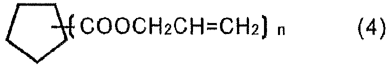 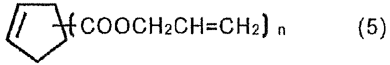 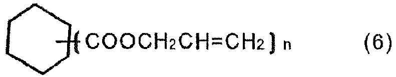 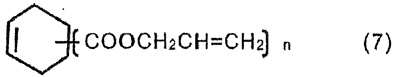 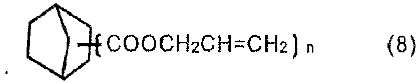 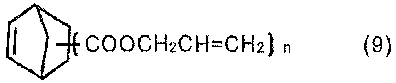 wherein n is an integer of 2 to 4.

The photocurable resin composition of the present invention preferably further contains an ethylenically unsaturated compound (C).

Since the ethylenically unsaturated compound (C) is highly compatible with the allyl polymer (A) and the silane coupling agent (B), it is suitable for forming a composition having high compatibility.

The photocurable resin composition of the present invention preferably further contains a photopolymerization initiator.

The photocurable resin composition containing a photopolymerization initiator can undergo smooth polymerization by exposure to light, so that a polymer having a higher molecular weight can be produced in a short time.

The ink of the present invention includes the photocurable resin composition of the present invention.

This ink is suitable as an ink for printing on plastic substrates, particularly on PP resin substrates such as sheets or films.

The coating material of the present invention includes the photocurable resin composition of the present invention.

This coating material is suitable as a coating material for painting on plastic substrates, particularly on PP resin substrates such as sheets or films.

The coating material of the present invention is also preferably an overprint varnish.

### ADVANTAGEOUS EFFECTS OF INVENTION

The present invention provides a photocurable resin composition that shows good adhesion to synthetic polymer substrates, particularly to plastic substrates, when it is used as a component of inks, coating materials, adhesives, or photoresists.

### DESCRIPTION OF EMBODIMENTS

The present invention will be described in detail below.

### Allyl polymer (A)

The allyl polymer (A) of the present invention may be any polymer produced by polymerizing an allyl compound represented by the following formula (1): 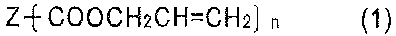 wherein n is an integer of 2 to 4 and Z is an n-valent alicyclic hydrocarbon group that may have an alkyl group. The "n-valent" is based on the number of COOH groups to be bound to Z. In formula (1), it refers to the number of - COOCH₂CH=CH₂ groups to be bound to Z. Similarly, the expression "n-valent alicyclic hydrocarbon group that may have an alkyl group" does not exclude embodiments in which the alicyclic hydrocarbon group is bound to a substituent other than alkyl groups, but it may not have any substituent other than alkyl groups.

The allyl polymer (A) preferably has a weight average molecular weight (Mw) of 2,000 to 150,000, more preferably 5,000 to 140,000. In particular, when n is 2 and Z is an alicyclic hydrocarbon group whose ring structure contains 4 to 10 carbon atoms, the allyl polymer (A) more preferably has a weight average molecular weight of 8,000 or more, still more preferably 10,000 or more, but more preferably 120,000 or less, still more preferably 100,000 or less, particularly preferably 60,000 or less. The "weight average molecular weight" herein can be determined by gel permeation chromatography (GPC system available from Shimadzu Corporation) at room temperature (25°C) using a polystyrene standard calibration curve.

The amount of a monomer unit derived from the allyl compound of formula (1) based on 100% by weight of the allyl polymer (A) is preferably 20% by weight or more, more preferably 50% by weight or more, still more preferably 80% by weight or more, particularly preferably 98% by weight or more, and may be 100% by weight. The allyl polymer (A) may be a copolymer of two or more different compounds selected from allyl compounds of formula (1), i.e., alicyclic allyl compounds and aromatic allyl compounds. The allyl polymer (A) may also be a copolymer of an allyl compound of formula (1) and a compound other than the allyl compound of formula (1), e.g., a different monomer having a C=C double bond such as a styrene monomer. It is particularly preferably a homopolymer produced by polymerizing a single allyl compound of formula (1) alone.

The amount of the allyl polymer (A) is preferably 1 to 60% by weight, more preferably 1 to 55% by weight, still more preferably 1 to 50% by weight of the total amount of the photocurable resin composition. When the amount of the allyl polymer (A) is more than 60% by weight, the solubility in the ethylenically unsaturated compound (C) may be poor, and the viscosity may also increase, resulting in poor handleability. When the amount of the allyl polymer (A) is less than 1% by weight, it may not provide sufficient drying properties to the photocurable resin composition. The lower limit of the amount of the allyl polymer (A) is more preferably 5% by weight or more, still more preferably 10% by weight or more, particularly preferably 20% by weight or more.

From the standpoint of further improving depth curability, Z in formula (1) is an n-valent alicyclic hydrocarbon group that may have an alkyl group.

### (i) n-Valent alicyclic hydrocarbon group that may have alkyl group

When Z in formula (1) is an n-valent alicyclic hydrocarbon group that may have an alkyl group, the ring structure of the alicyclic hydrocarbon group preferably contains 3 to 18, more preferably 4 to 12, still more preferably 4 to 10, particularly preferably 5 to 7 carbon atoms.

The n-valent alicyclic hydrocarbon group may be a saturated n-valent alicyclic hydrocarbon group or may partially contain an unsaturated bond. Preferably, it is a saturated n-valent alicyclic hydrocarbon group. In other words, the number of unsaturated bonds is preferably 2 or less, more preferably 1 or less, particularly preferably 0. Herein, the term "alicyclic" means a hydrocarbon group having a non-aromatic ring structure.

Moreover, the number of rings is preferably 1 or 2, particularly preferably 1, but may be 3 or more. When the number of rings is 2 or more, they may form a fused or bridged ring system or a system having both structures, but they preferably form a system having a bridged ring.

When Z in formula (1) is an n-valent aliphatic acyclic hydrocarbon group, n is preferably 2 or 3, more preferably 2.

Moreover, the n-valent alicyclic hydrocarbon group may or may not have an alkyl group. The alkyl group may be a linear or branched alkyl group having a carbon number of 1 to 10, preferably 1 to 5, more preferably a methyl or ethyl group. One or two or more alkyl groups may be present at substitutable position(s) of the alicyclic hydrocarbon group. Furthermore, the n-valent alicyclic hydrocarbon group may or may not have a substituent other than alkyl groups.

When Z in formula (1) is an n-valent alicyclic hydrocarbon group, specific examples of the allyl compound include compounds represented by the following formulas (2) to (9) (particularly preferably formulas (4) to (7)): 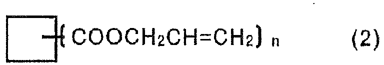 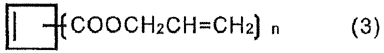 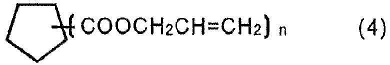 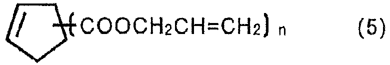 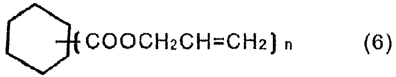 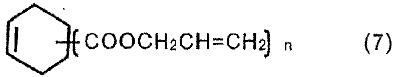 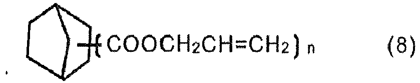 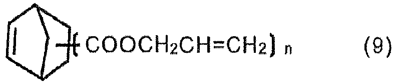 wherein n is an integer of 2 to 4.

. In formulas (2) to (9), there may be a bridge within the ring structure. Examples of the compounds with a bridge within the ring structure include adamantane and norbornane.

The positions of COOCH₂CH=CH₂ substituents on the ring in each of formulas (2) to (9) may be any combination or may be a mixture of different combinations. In particular, when two COOCH₂CH=CH₂ groups are bound to a six-membered ring, the two COOCH₂CH=CH₂ groups may be in an ortho (1,2-disubstitution), meta (1,3-disubstitution), or para (1,4-disubstitution) orientation, preferably in an ortho (1,2-disubstitution) or para (1,4-disubstitution) orientation.

When Z in formula (1) is an n-valent alicyclic hydrocarbon group, specific examples of the allyl compound include diallyl cyclobutanedicarboxylate, diallyl cyclopentanedicarboxylate, diallyl cyclohexanedicarboxylate (diallyl hexahydrophthalate), diallyl norbornanedicarboxylate, diallyl cyclobutenedicarboxylate, diallyl cyclopenenedicarboxylate, diallyl cyclohexenedicarboxylate (diallyl tetrahydrophthalate), diallyl norbornenedicarboxylate, 3-methyl-hexahydro-1,2-diallyl phthalate, 4-methyl-hexahydro-1,2-diallyl phthalate, 3-methyl-1,2,3,6-tetrahydro-1,2-diallyl phthalate, 4-methyl-1,2,3,6-tetrahydro-1,2-diallyl phthalate, 3,6-endomethylene-3-methyl-1,2,3,6-tetrahydro-1,2-diallyl phthalate, 3,6-endomethylene-4-methyl-1,2,3,6-tetrahydro-1,2-diallyl phthalate, diallyl 4-cyclohexene-1,2-dicarboxylate, and diallyl 2-cyclohexene-1,2-dicarboxylate. Z is more particularly preferably a ring structure having no unsaturated bond and having a carbon number of 4 to 7, further preferably 5 or 6, most preferably 6. Among these, diallyl 1,2-cyclohexanedicarboxylate, diallyl 1,3-cyclohexanedicarboxylate, diallyl 1,4-cyclohexanedicarboxylate, and diallyl norbornanedicarboxylate are preferred, with diallyl 1,2-cyclohexanedicarboxylate being more preferred.

Hereinafter, the allyl compound in which Z is an n-valent alicyclic hydrocarbon group that may have an alkyl group may be referred to as "alicyclic allyl compound".

### (ii) Method for producing allyl compound

The allyl compound in the present invention may be produced by reacting a carboxylic acid compound represented by the formula (10) below or an acid anhydride thereof with an allyl halide or allyl alcohol in the presence of optional additives such as an acidic substance, a basic substance, a catalyst, and/or a solvent. The carboxylic acid compound of formula (10) is available as a reagent or an industrial chemical. Needless to say, the allyl compound of formula (1) may be a commercially available allyl compound of formula (1).

Z-(COOH)n (10)

In the formula, n and Z are as defined in formula (1).

Examples of the allyl halide include allyl chloride, allyl bromide, and allyl iodide. The amount of the allyl halide to be used is not particularly limited, but is usually preferably in the range of 2 to 20 equivalents relative to the amount of the carboxylic acid compound of formula (10). In view of reaction rate and volume efficiency, the amount is more preferably in the range of 2.3 to 10 equivalents. The allyl halide compound is available as a reagent or an industrial chemical.

The allyl alcohol is available as a reagent or an industrial chemical. The amount of the allyl alcohol to be used is not particularly limited, but is usually preferably in the range of 2 to 10 molar equivalents, more preferably 2 to 5 molar equivalents relative to the amount of the carboxylic acid compound of formula (10).

Examples of the acidic substance include dodecylbenzenesulfonic acid and sulfuric acid. The amount of the acidic substance to be used is preferably in the range of 0.001 to 0.1 equivalents, more preferably 0.005 to 0.05 equivalents relative to the amount of the carboxylic acid compound of formula (10).

Typical examples of the basic substance include alkali metal hydroxides such as sodium hydroxide and potassium hydroxide; alkali metal hydrides such as sodium hydride and potassium hydride; carbonates such as sodium carbonate and potassium carbonate; hydrogen carbonates such as sodium hydrogen carbonate and potassium hydrogen carbonate; and alcoholates. Hydroxides, hydrides, carbonates, and hydrogen carbonates of alkaline earth metals and organic bases such as quaternary ammonium compounds, aliphatic amines, and aromatic amines may also be used. The amount of the basic substance to be used is preferably in the range of 0.5 to 30 equivalents, more preferably 2 to 15 equivalents relative to the amount of the carboxylic acid compound of formula (10).

Examples of the catalyst include transition metals such as copper, iron, cobalt, nickel, chromium, and vanadium, and transition metal salts. Copper compounds, among others, can be suitably used.

The copper compounds are not particularly limited, and most copper compounds may be used. Preferred examples include copper halides such as cuprous chloride, cupric chloride, cuprous bromide, cupric bromide, cuprous iodide, and cuprous oxide, cuprous cyanide, copper salts of inorganic acids such as cuprous sulfate, cupric sulfate, cupric phosphate, cuprous nitrate, and cupric nitrate, and cupric hydroxide, copper carbonate, cuprous acetate, and cupric acetate. Among these, cuprous chloride, cupric chloride, cuprous bromide, cupric bromide, cuprous iodide, copper sulfate, and cupric acetate are particularly suitable because they are readily available and inexpensive.

The reaction may be carried out in the presence or absence of a solvent. Any solvent which does not adversely affect the reaction may be used. Examples include aromatic hydrocarbons such as benzene, toluene, and xylene; saturated aliphatic hydrocarbons such as hexane, heptane, octane, cyclohexane, and methylcyclohexane; ethers such as diethyl ether, diethylene glycol dimethyl ether, 1,4-dioxane, and tetrahydrofuran; esters such as ethyl acetate and butyl acetate; halogenated hydrocarbons such as methylene chloride, chloroform, and carbon tetrachloride; dimethylformamide, N-methylpyrrolidone, and sulfolane. These solvents may be used alone, or two or more of these may be used in combination. The amount of the solvent, if used, is not particularly limited, but is usually preferably in the range of 0.01 to 20 times, more preferably 0.1 to 10 times the weight of the carboxylic acid compound of formula (10). The reaction allows for efficient production of the allyl compound without using any solvent.

Particularly in the case where an aqueous solution of the basic substance is used in the reaction, a phase-transfer catalyst is preferably used to promote the reaction. Any phase-transfer catalyst may be used, and examples include quaternary ammonium salts such as trioctylmethylammonium chloride, tetrabutylammonium chloride, and tetrabutylammonium bromide; phosphonium salts such as tetrabutylphosphonium chloride; and crown ethers such as 15-crown-5 and 18-crown-6. The amount of the phase-transfer catalyst, if used, is usually preferably in the range of 0.001 to 1 equivalent, more preferably 0.01 to 0.4 equivalents relative to the amount of the carboxylic acid compound of formula (10).

The reaction temperature is usually preferably in the range of -30°C to 150°C, more preferably -10°C to 130°C, in order to provide a sufficient reaction rate and to effectively suppress side reactions to obtain a high yield. Moreover, the reaction time is preferably in the range of 10 minutes to 15 hours. In order to suppress side reactions, the reaction time is preferably in the range of 10 minutes to 10 hours.

The reaction is preferably carried out in an inert gas atmosphere, such as nitrogen or argon. Moreover, the reaction may be carried out either under atmospheric pressure or under higher pressure but, from a production facility standpoint, it is preferably carried out under atmospheric pressure. The reaction may be conducted, for example, by introducing raw materials all at once or in portions into a stirring reactor and allowing the reaction to proceed at a predetermined temperature for a predetermined time as described above at paragraph [0038].

After completion of the reaction, the reaction mixture may be neutralized and then optionally washed with, for example, water or saturated saline, followed by concentration and then purification by usual procedures for purifying organic compounds, such as distillation or column chromatography, thereby obtaining a highly purified allyl compound.

### (iii) Method for producing allyl polymer (A)

The allyl compound may be polymerized by any method. Conventional polymerization reactions can be used. In the polymerization reaction, a polymerization initiator may be appropriately added, if needed. The use of a polymerization initiator enables production of a polymer having a higher molecular weight in a short time.

Examples of the polymerization initiator used in the polymerization reaction of the allyl compound include azo polymerization initiators such as azobisisobutyronitrile and dimethyl 2,2'-azobisisobutyrate; peroxide polymerization initiators such as ketone peroxides, peroxy ketals, hydroperoxides, dialkyl peroxides, diacyl peroxides, peroxy dicarbonates, peroxy esters, and benzoyl peroxide; acetophenone photopolymerization initiators such as 2-methyl-1-[4-(methylthio)phenyl]-2-morpholinopropan-1-one and 1-hydroxycyclohexyl phenyl ketone; benzoin photopolymerization initiators such as benzoin and benzoin ethyl ether; benzophenone photopolymerization initiators such as benzophenone; and phosphorus photopolymerization initiators such as acylphosphine oxide. The photopolymerization initiators may be used in combination with sensitizers such as sulfur compounds (e.g. thioxanthone) or benzil compounds (e.g. benzil, 9,10-phenanthrenequinone).

The amount of the polymerization initiator added per 100 parts by weight of the allyl compound is preferably 5.0 parts by weight or less, more preferably 3.0 parts by weight or less, and still more preferably 0.001 to 3.0 parts by weight.

The reaction temperature during the polymerization is preferably 60°C to 240°C, more preferably 80°C to 220°C. The reaction time is preferably 0.1 to 100 hours, more preferably 1 to 30 hours.

By polymerizing the allyl compound of formula (1) as described above or by other methods, an allyl polymer (A) having monomer units derived from the allyl compound of formula (1) can be prepared. Hereinafter, an allyl polymer produced by polymerizing an "alicyclic allyl compound" may be referred to as an "alicyclic allyl polymer".

### Silane coupling agent (B)

The silane coupling agent (B) may be any compound having a functional group (reactive functional group) that chemically binds to an organic material and a functional group (hydrolyzable organic functional group) that chemically binds to an inorganic material. The silane coupling agent (B) typically has a chemical structure represented by the formula: Y-Si(CH3)n-(R)3-n. In the formula, Y is a reactive functional group and may be, for example, a vinyl group, an epoxy group, a styryl group, a methacrylic group, an acrylic group, a ureido group, a mercapto group, a (poly)sulfide group, an alkyl group, a chloroalkyl group, or an isocyanate group; R is a hydrolyzable organic functional group and may be, for example, an alkoxy group such as a methoxy or ethoxy group; and n is 0, 1, or 2. Specific examples of the silane coupling agent include, depending on the type of reactive functional group, vinyl silane coupling agents, epoxy silane coupling agents, styryl silane coupling agents, methacrylic silane coupling agents, acrylic silane coupling agents, ureido silane coupling agents, mercapto silane coupling agents, (poly)sulfide silane coupling agents, alkyl silane coupling agents, chloroalkyl silane coupling agents, isocyanurate silane coupling agents, and isocyanate silane coupling agents.

The studies conducted by the present inventors have demonstrated that adding a silane coupling agent having an amino group (amino silane coupling agent) tends to cause gelation of the composition and thus tends to result in poor handleability. For this reason, the silane coupling agent is preferably free from an amino group. In other words, the silane coupling agent is preferably a silane coupling agent other than amino silane coupling agents.

Examples of the vinyl silane coupling agents include vinyltrimethoxysilane, vinyltriethoxysilane, vinyltris(2-methoxyethoxy)silane, allyltrichlorosilane, allyltrimethoxysilane, allyltriethoxysilane, diethoxymethylvinylsilane, trichlorovinylsilane, triethoxyvinylsilane, vinylmethyldimethoxysilane, vinyltriisopropoxysilane, diethoxymethylallylsilane, and 4-vinylphenyltrimethoxysilane.

Examples of the epoxy silane coupling agents include 2-(3,4-epoxycyclohexyl)ethyltrimethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 3-glycidoxymethyltrimethoxysilane, 3-glycidoxymethyltriethoxysilane, and 3-glycidoxyethyltriethoxysilane.

Examples of the styryl silane coupling agents include p-styryltrimethoxysilane.

Examples of the methacrylic silane coupling agents include methacryloxymethyltrimethoxysilane, methacryloxymethyltriethoxysilane, methacryloxymethylmethyldimethoxysilane, methacryloxymethyldimethylmethoxysilane, 3-methacryloxypropyltrimethoxysilane, 3-methacryloxypropyltriethoxysilane, γ-methacryloxypropylmethyldimethoxysilane, γ-methacryloxypropylmethyldiethoxysilane, and 3-methacryloxypropyldimethylmethoxysilane. Preferred among them are 3-methacryloxypropyltrimethoxysilane, 3-methacryloxypropyltriethoxysilane, γ-methacryloxypropylmethyldimethoxysilane, γ-methacryloxypropylmethyldiethoxysilane, and 3-methacryloxypropyldimethylmethoxysilane. More preferred is 3-methacryloxypropyltrimethoxysilane.

Examples of the acrylic silane coupling agents include acryloxymethyltrimethoxysilane, acryloxymethyltriethoxysilane, acryloxymethylmethyldimethoxysilane, acryloxymethyldimethylmethoxysilane, 3-acryloxypropyltrimethoxysilane, 3-acryloxypropyltriethoxysilane, γ-acryloxypropylmethyldimethoxysilane, 3-acryloxypropylmethyldiethoxysilane, and γ-acryloxypropyldimethylmethoxysilane.

Examples of the ureido silane coupling agents include 3-ureidopropyltriethoxysilane.

Examples of the mercapto silane coupling agents include 3-mercaptopropyltrimethoxysilane, 3-mercaptopropyltriethoxysilane, and 3-mercaptopropylmethyldimethoxysilane.

Examples of the (poly)sulfide silane coupling agents include bis(3-(triethoxysilyl)-propyl)-disulfide, bis(3-(triethoxysilyl)-propyl)-trisulfide, bis(3-(triethoxysilyl)-propyl)-tetrasulfide, bis(3-trimethoxysilylpropyl)disulfide, bis(2-triethoxysilylethyl)tetrasulfide, bis(2-trimethoxysilylethyl)tetrasulfide, and bis(3-triethoxysilylpropyl)disulfide. Examples also include 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, and 3-triethoxysilylpropylbenzothiazole tetrasulfide.

Also preferred are bis(3-triethoxysilylpropyl)disulfide (abbreviated as TESPD) and bis(3-triethoxysilylpropyl)tetrasulfide (abbreviated as TESPT). Specific examples include product names "CABRUS-2" and "CABRUS-4" (both available from Osaka Soda Co., Ltd.), "Si75" and "Si69"(available from Degussa), "A-1289" (available from Momentive Performance Materials), and "KBE-846" (available from Shin-Etsu Chemical Co., Ltd.).

Among these, bis(3-(triethoxysilyl)-propyl)-disulfide or bis(3-(triethoxysilyl)-propyl)-tetrasulfide is preferred, with bis(3-(triethoxysilyl)-propyl)-disulfide being more preferred.

Examples of the alkyl silane coupling agents include methyltrimethoxysilane, dimethyldiethoxysilane, propyltriethoxysilane, hexyltrimethoxysilane, octyltriethoxysilane, hexamethyldisilazane, phenyltrimethoxysilane, methyltriethoxysilane, methyltriphenoxysilane, methyltrichlorosilane, ethyltrimethoxysilane, n-propyltrimethoxysilane, isobutyltrimethoxysilane, n-hexyltriethoxysilane, n-octyltrimethoxysilane, n-decyltrimethoxysilane, dimethyldimethoxysilane, dimethyldichlorosilane, diisopropyldimethoxysilane, diisobutyldimethoxysilane, cyclohexylmethyldimethoxysilane, trimethylmethoxysilane, and trimethylchlorosilane.

Examples of the chloroalkyl silane coupling agents include 3-chloropropyltrimethoxysilane and 3-chloropropyltriethoxysilane. Among these, 3-chloropropyltriethoxysilane is preferred.

Examples of the isocyanurate silane coupling agents include tris-(trimethoxysilylpropyl)isocyanurate and tris-(triethoxysilylpropyl)isocyanurate.

Examples of the isocyanate silane coupling agents include 3-isocyanatopropyltriethoxysilane.

From the standpoint of improving adhesion to olefinic resin films such as polypropylene and of compatibility with the allyl polymer (A) and the ethylenically unsaturated compound (C) during the addition into the photocurable resin composition, the silane coupling agent (B) is preferably at least one selected from the group consisting of vinyl silane coupling agents, epoxy silane coupling agents, styryl silane coupling agents, methacrylic silane coupling agents, acrylic silane coupling agents, ureido silane coupling agents, mercapto silane coupling agents, (poly)sulfide silane coupling agents, alkyl silane coupling agents, chloroalkyl silane coupling agents, isocyanurate silane coupling agents, and isocyanate silane coupling agents, more preferably from methacrylic silane coupling agents, (poly)sulfide silane coupling agents, and chloroalkyl silane coupling agents, still more preferably from (poly)sulfide silane coupling agents and chloroalkyl silane coupling agents.

The amount of the silane coupling agent (B) in the photocurable resin composition is preferably 0.1 to 30 parts by weight, more preferably 0.5 to 20 parts by weight, particularly preferably 1 to 10 parts by weight per 100 parts by weight of the allyl polymer (A) in the photocurable resin composition. When the amount is within the range indicated above, sufficient adhesion to plastic substrates can be provided, and further the allyl polymer (A) and silane coupling agent (B) can remain sufficiently soluble so that the composition has excellent compatibility. Even when the ethylenically unsaturated compound (C) is added, they can remain sufficiently soluble.

### Ethylenically unsaturated compound (C)

The photocurable resin composition of the present invention preferably contains an ethylenically unsaturated compound (C) that can be cured by exposure to light. Since the allyl polymer (A) has high solubility in various ethylenically unsaturated compounds (C), any ethylenically unsaturated compound (C) may be used. The ethylenically unsaturated compound (C) preferably has 1 to 20, more preferably 1 to 10, still more preferably 2 to 6 carbon-carbon double bonds. The ethylenically unsaturated compound (C) may be, for example, a (meth)acrylic acid ester compound, a (meth)allyl compound, or a vinyl compound. The ethylenically unsaturated compound may also be a mixture of two or more compounds.

Examples of the (meth)acrylic acid ester compound include (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, or polypropylene glycol, and alkylene oxide (e.g., ethylene oxide or propylene oxide) adducts of the foregoing (meth)acrylic acid ester compounds; (meth)acrylic acid ester compounds of alkylene oxide (e.g., ethylene oxide or propylene oxide) adducts of bisphenols such as bisphenol A or bisphenol F; (meth)acrylic acid ester compounds such as epoxy (meth)acrylates, urethane (meth)acrylates, and alkyd (meth)acrylates; and (meth)acrylic acid ester compounds such as epoxidized soybean oil acrylate. Preferred are (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, or polypropylene glycol, and alkylene oxide (e.g., ethylene oxide or propylene oxide) adducts of the foregoing (meth)acrylic acid ester compounds. More preferred are (meth)acrylic acid ester compounds of alcohols such as pentaerythritol, dipentaerythritol, trimethylolpropane, or ditrimethylolpropane, and alkylene oxide (e.g., ethylene oxide or propylene oxide) adducts of the foregoing (meth)acrylic acid ester compounds.

Examples of the (meth)allyl compound include di(meth)allyl phthalates and tri(meth)allyl isocyanurates.

Examples of the vinyl compound include styrene, divinylbenzene, N-vinylpyrrolidone, and vinyl acetate.

In particular, in view of compatibility with the allyl polymer (A) and curability in photo-curing, ditrimethylolpropane tetraacrylate or trimethylolpropane triacrylate is preferred, with ditrimethylolpropane tetraacrylate being more preferred.

The amount of the ethylenically unsaturated compound (C) added in the photocurable resin composition of the present invention is preferably adjusted such that the photocurable resin composition has a viscosity in the range of 100 to 300 Pa·s (25°C). Specifically, the amount of the ethylenically unsaturated compound (C) is preferably 50 to 2000 parts by weight, more preferably 50 to 1000 parts by weight, still more preferably 60 to 400 parts by weight per 100 parts by weight of the allyl polymer (A) in the photocurable resin composition.

### Other additives

The photocurable resin composition of the present invention may contain a polymerization initiator, particularly preferably a photopolymerization initiator. Examples of the photopolymerization initiator used in the photocurable resin composition include acetophenone initiators such as 2-methyl-1-[4-(methylthio)phenyl]-2-morpholinopropan-1-one and 1-hydroxycyclohexyl phenyl ketone; benzoin initiators such as benzoin and benzoin ethyl ether; benzophenone initiators such as benzophenone; phosphorus initiators such as acylphosphine oxide; sulfur initiators such as thioxanthone; and dibenzil initiators such as benzil and 9,10-phenanthrenequinone.

The amount of the photopolymerization initiator in the photocurable resin composition is preferably in the range of 0.1 to 15% by weight, more preferably 0.5 to 12% by weight, still more preferably 1 to 10% by weight of the total photocurable resin composition.

A photoinitiation aid (e.g., an amine photoinitiation aid such as triethanolamine) may be used together in the photocurable resin composition.

The amount of the photoinitiation aid is preferably in the range of 0.1 to 5% by weight, more preferably 0.5 to 3% by weight of the total photocurable resin composition.

The photocurable resin composition of the present invention may contain various additives depending on the purpose, and examples of such additives include stabilizers such as polymerization inhibitors (e.g. hydroquinone, methoquinone, methylhydroquinone), coloring agents such as pigments (e.g. cyanine blue, disazo yellow, carmine 6b, lake red C, carbon black, titanium white), fillers, and viscosity modifiers. The amount of the stabilizer in the photocurable resin composition is preferably in the range of 0.01 to 2% by weight, more preferably 0.1 to 1% by weight of the total photocurable resin composition.

The amount of the coloring agent is preferably in the range of 1 to 50% by weight, more preferably 1 to 45% by weight of the total photocurable resin composition.

The photocurable resin composition of the present invention may be prepared by mixing an allyl polymer (A) with a silane coupling agent (B) and optionally with an ethylenically unsaturated compound (C) as well as a photopolymerization initiator, a photoinitiation aid, and additives (e.g. stabilizers, pigments). The photocurable resin composition of the present invention is curable by exposure to light. The light used for curing is usually ultraviolet rays.

The curing reaction of the photocurable resin composition may be performed using any curing apparatus under any curing conditions, and any conventional methods for photocuring reactions can be used.

The photocurable resin composition of the present invention can be used in any application. It can be used in various technical fields, such as inks (e.g. printing inks such as photocurable lithographic inks, silk screen inks, and gravure inks), coating materials (e.g. coating materials for paper, plastics, metals, wood, or other substrates, such as overprint varnishes), adhesives, and photoresists.

The ink of the present invention encompasses any ink that includes the photocurable resin composition of the present invention. The coating material of the present invention encompasses any coating material that includes the photocurable resin composition of the present invention. The coating material of the present invention is preferably an overprint varnish.

For example, the ink may typically be prepared as follows. An allyl polymer (A), a silane coupling agent (B), and additives such as a stabilizer may be dissolved in an ethylenically unsaturated compound (C) with stirring at 60°C to 100°C to prepare a varnish, which may then be combined with a pigment, a photopolymerization initiator, and other additives with stirring in a butterfly mixer, followed by milling using, for example, a three-roll mill to obtain an ink.

The overprint varnish may also be prepared by the same procedure as described for the ink but using no pigment.

### EXAMPLES

The present invention is described in greater detail below referring to, but not limited to, examples.

### Determination of weight average molecular weight (Mw) and molecular weight distribution (Mw/Mn) of allyl polymer

The weight average molecular weight (Mw) and the molecular weight distribution (Mw/Mn) were determined by GPC. Mw and Mn refer to polystyrene equivalent weight and number average molecular weights, respectively.
Column: Shodex KF-806L, KF-804, KF-803, KF-802, and KF-801 connected in series
Flow rate: 1.0 mL/min
Temperature: 40°C
Detection: RID-6A
Samples: measurement samples prepared by dissolving 20 mg of each sample in 10 mL of tetrahydrofuran

### Production Example 1: Synthesis of polymer of diallyl 1,2-cyclohexanedicarboxylate

Diallyl 1,2-cyclohexanedicarboxylate was produced by an esterification reaction between cyclohexanedicarboxylic anhydride and allyl alcohol.

To a 3 L separable flask were added 2,400 g of diallyl 1,2-cyclohexanedicarboxylate and 60 g of benzoyl peroxide, followed by stirring with heat at 80°C. After 2.5 hours of reaction, the reaction mixture was cooled to 30°C. After the cooling, methanol was added to the flask to precipitate a polymer. The polymer was dried under reduced pressure at 40°C for 16 hours to obtain Polymer 1 (weight recovered: 408 g, yield: 17%, Mw = 32,000, Mw/Mn = 2.8) .

### Examples 1 to 6 and Comparative Example 1

Photocurable resin compositions having the formulations shown in Table 1 below were prepared. The characteristics of the photocurable resin compositions were evaluated.

**[Table 1]**

| | | Example 1 | Example 2 | Example 3 | Example 4 | Example 6 | Example 6 | Comparative Example 1 |
|---|---|---|---|---|---|---|---|---|
| Allyl polymer (A) | Polymer 1 | 35 | 35 | 35 | 35 | 35 | 35 | as |
| Ethylenlcally unsaturated compound (C) | SR355 | 65 | 65 | 65 | 65 | 65 | 65 | 65 |
| Silane coupling agent (B) | 3-Methacryloxypropyltrimethoxysilane | 0.5 | | | 2 | | | |
| | CABRUS-2 | | 0.5 | | | 3 | | |
| | 3-Chloropropyltriethoxysilane | | | 0.5 | | | 1 | |
| Polymerization Inhibitor | Methyl hydroquinone | 0.1 | 0.1 | 0.1 | 0.1 | 0.1 | 0.1 | 0.1 |

The components other than Polymer 1 listed in Table 1 are described below.

It should be noted that the formulation amounts in Table 1 are in parts by weight.
SR355: DTMPTA, ditrimethylolpropane tetraacrylate, available from Sartomer
3-Methacryloxypropyltrimethoxysilane: KBM-503 available from Shin-Etsu Chemical Co., Ltd.
CABRUS-2: CABRUS-2, bis(3-(triethoxysilyl)-propyl)-disulfide, available from Osaka Soda Co., Ltd.
3-Chloropropyltriethoxysilane: a product available from Tokyo Chemical Industry Co., Ltd.
Methylhydroquinone: a product available from FUJIFILM Wako Pure Chemical Corporation

### 1) Adhesion test

Irgacure 907 (available from BASF Japan Ltd., 2-methyl-1-[4-(methylthio)phenyl]-2-morpholinopropan-1-one) as a photopolymerization initiator was added to the photocurable resin compositions, followed by mixing under heat to prepare samples for the adhesion test.

The amount of the photopolymerization initiator added was 5 parts by weight per 100 parts by weight of the combined amount of the allyl polymer (A), the silane coupling agent (B), and the ethylenically unsaturated compound (C) in the photocurable resin composition. The samples prepared for the adhesion test were coated on a plastic film (polypropylene substrate: high clarity cast PP sheet available from Tatsuta Chemical Co., Ltd., product name: High P Crystal ST-500, thickness: 0.3 mm) with an RI tester and then cured using a metal halide lamp with an output of 120 W/cm (passed several times at a lamp distance of 11 cm and a conveyer speed of 50 m/min until the coating film became tack-free). The UV curing apparatus used was a conveyer-type UV curing apparatus available from Eye Graphics Co., Ltd. An 18 mm-wide strip of Cellotape^{®} (Nichiban Co., Ltd., product number: LP-18, adhesive force: 4.01 N/10 mm) was attached to the obtained coating film, rubbed vigorously with the thumb 10 times, and then slowly pulled straight upward from the coating film. The samples were rated "Good" if they were not completely peeled, and "Poor" if they were completely peeled. The evaluation results were shown in Table 2.

**[Table 2]**

| | Example 1 | Example 2 | Example 3 | Example 4 | Example 5 | Example 6 | Comparative Example 1 |
|---|---|---|---|---|---|---|---|
| Adhesion | Good | Good | Good | Good | Good | Good | Poor |

The results in Table 2 show that the combined use of an allyl polymer (A) and a silane coupling agent (B) provided good adhesion to plastic substrates.

### INDUSTRIAL APPLICABILITY

The photocurable resin composition of the present invention can be used in inks (e.g., offset inks), coating materials, adhesives, photoresists, and other applications for plastic substrates.

## Claims

1. A photocurable resin composition, comprising:
an allyl polymer (A) produced by polymerizing an allyl compound represented by the following formula (1): 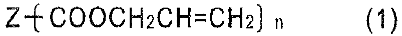 wherein n is an integer of 2 to 4 and Z is an n-valent alicyclic hydrocarbon group that may have an alkyl group; and
a silane coupling agent (B).

2. The photocurable resin composition according to claim 1,
wherein the silane coupling agent (B) is at least one selected from the group consisting of vinyl silane coupling agents, epoxy silane coupling agents, styryl silane coupling agents, methacrylic silane coupling agents, acrylic silane coupling agents, ureido silane coupling agents, mercapto silane coupling agents, (poly)sulfide silane coupling agents, alkyl silane coupling agents, chloroalkyl silane coupling agents, isocyanurate silane coupling agents, and isocyanate silane coupling agents.

3. The photocurable resin composition according to claim 1 or 2,
wherein the allyl compound of formula (1) is a compound represented by any of the following formulas (2) to (9): 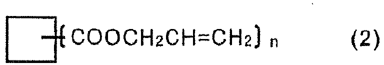 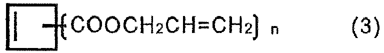 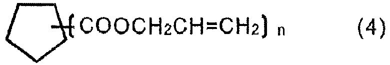 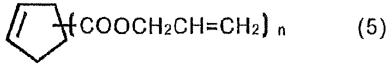 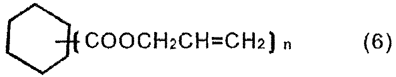 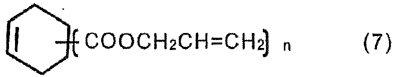 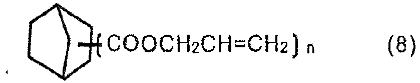 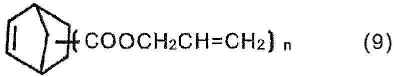 wherein n is an integer of 2 to 4.

4. The photocurable resin composition according to any one of claims 1 to 3, further comprising an ethylenically unsaturated compound (C).

5. The photocurable resin composition according to any one of claims 1 to 4, further comprising a photopolymerization initiator.

6. An ink, comprising the photocurable resin composition according to any one of claims 1 to 5.

7. A coating material, comprising the photocurable resin composition according to any one of claims 1 to 5.

8. The coating material according to claim 7, which is an overprint varnish.

## Patentansprüche

1. Eine lichthärtbare Harzzusammensetzung, umfassend:
ein Allylpolymer (A), hergestellt durch Polymerisieren einer Allylverbindung, dargestellt durch die nachstehende Formel (1): 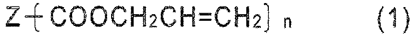 wobei n eine ganze Zahl von 2 bis 4 ist und Z eine n-wertige alicyclische Kohlenwasserstoffgruppe ist, die eine Alkylgruppe enthalten kann; und
ein Silan-Kupplungsmittel (B).

2. Die lichthärtbare Harzzusammensetzung gemäß Anspruch 1,
wobei das Silan-Kupplungsmittel (B) mindestens eines ist, ausgewählt aus der Gruppe bestehend aus Vinylsilan-Kupplungsmitteln, Epoxysilan-Kupplungsmitteln, Styrylsilan-Kupplungsmitteln, Methacrylsilan-Kupplungsmitteln, Acrylsilan-Kupplungsmitteln, Ureidosilan-Kupplungsmitteln, Mercaptosilan-Kupplungsmitteln, (Poly)sulfidsilan-Kupplungsmitteln, Alkylsilan-Kupplungsmitteln, Chloralkylsilan-Kupplungsmitteln, Isocyanuratsilan-Kupplungsmitteln und Isocyanatsilan-Kupplungsmitteln.

3. Die lichthärtbare Harzzusammensetzung gemäß Anspruch 1 oder 2,
wobei die Allylverbindung der Formel (1) eine Verbindung ist, dargestellt durch eine der folgenden Formeln (2) bis (9): 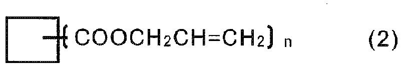 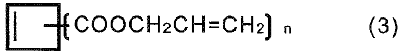 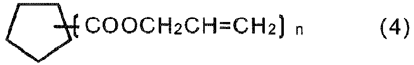 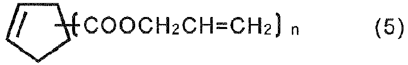 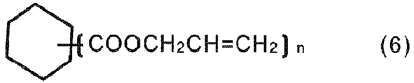 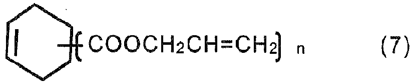 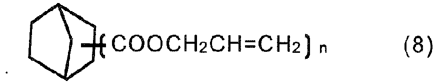 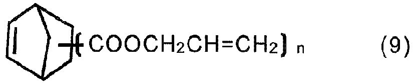
wobei n eine ganze Zahl von 2 bis 4 ist.

4. Die lichthärtbare Harzzusammensetzung gemäß einem der Ansprüche 1 bis 3, ferner umfassend eine ethylenisch ungesättigte Verbindung (C).

5. Die lichthärtbare Harzzusammensetzung gemäß einem der Ansprüche 1 bis 4, ferner umfassend einen Photopolymerisationsinitiator.

6. Eine Tinte, umfassend die lichthärtbare Harzzusammensetzung gemäß einem der Ansprüche 1 bis 5.

7. Ein Beschichtungsmaterial, umfassend die lichthärtbare Harzzusammensetzung gemäß einem der Ansprüche 1 bis 5.

8. Das Beschichtungsmaterial gemäß Anspruch 7, wobei es sich um einen Überzugslack handelt.

## Revendications

1. Composition de résine photodurcissable comprenant :
un polymère d'allyle (A) produit par polymérisation d'un composé allyle représenté par la formule (1) suivante : 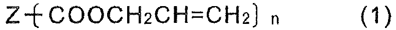
dans laquelle n est un entier de 2 à 4 et Z est un groupe hydrocarboné alicyclique de valence n qui peut porter un groupe alkyle ; et
un agent de couplage de type silane (B).

2. Composition de résine photodurcissable selon la revendication 1, dans laquelle l'agent de couplage de type silane (B) est au moins l'un choisi dans le groupe constitué par les agents de couplage de type vinylsilane, les agents de couplage de type époxysilane, les agents de couplage de type styrylsilane, les agents de couplage de type silane méthacrylique, les agents de couplage de type silane acrylique, les agents de couplage de type uréido-silane, les agents de couplage de type mercapto-silane, les agents de couplage de type (poly)sulfure-silane, les agents de couplage de type alkylsilane, les agents de couplage de type chloroalkylsilane, les agents de couplage de type isocyanurate-silane, et les agents de couplage de type isocyanato-silane.

3. Composition de résine photodurcissable selon la revendication 1 ou 2,
dans laquelle le composé allyle de formule (1) est un composé représenté par l'une quelconque des formules (2) à (9) suivantes : 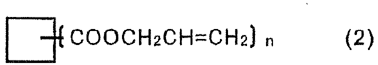 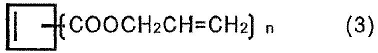 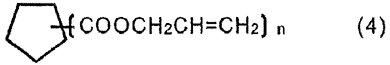 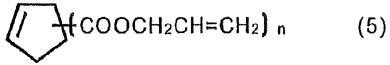 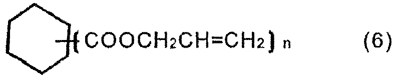 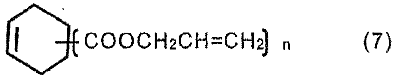 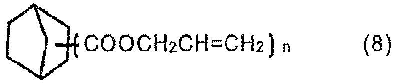 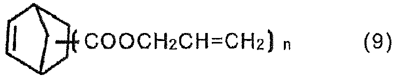
dans laquelle n est un entier de 2 à 4.

4. Composition de résine photodurcissable selon l'une quelconque des revendications 1 à 3, comprenant en outre un composé à insaturation éthylénique (C).

5. Composition de résine photodurcissable selon l'une quelconque des revendications 1 à 4, comprenant en outre un amorceur de photopolymérisation.

6. Encre comprenant la composition de résine photodurcissable de l'une quelconque des revendications 1 à 5.

7. Matériau de revêtement comprenant la composition de résine photodurcissable de l'une quelconque des revendications 1 à 5.

8. Matériau de revêtement selon la revendication 7, qui est un vernis de surimpression.
